# EUROPÄISCHE PATENTSCHRIFT

(11) **EP 1 626 384 B1**
(45) Veröffentlichungstag und Bekanntmachung des Hinweises auf die Patenterteilung: **11.06.2008**
(21) Anmeldenummer: 05105294.2
(22) Anmeldetag: 16.06.2005
(51) Int. Cl.: B62D 15/02, B60Q 1/48, B60W 30/06, G08G 1/16

(54) **Einparkhilfe für ein Kraftfahrzeug und Verfahren zum Unterstützen eines Kraftfahrzeugbenutzers beim Einparken eines Kraftfahrzeuges**
Parking assistance system for a vehicle and method for assisting a vehicle user when parking a vehicle
Système d'assistance de stationnement d'un véhicule et procédé pour assister un usager à stationner un véhicule

(30) Priorität: 12.08.2004 DE 102004039179
(43) Veröffentlichungstag der Anmeldung: 15.02.2006
(73) Patentinhaber: ROBERT BOSCH GMBH, 70442 Stuttgart (DE)
(72) Erfinder: Danz, Christian, 70469 Stuttgart (DE); Schmid, Dirk, 75397 Simmozheim (DE); Lehner, Philipp, 75417 Muehlacker (DE); Schaaf, Gunther, 70806 Kornwestheim (DE)

(56) Entgegenhaltungen:
- EP-A- 1 327 559
- WO-A-02/22407
- WO-A-03/055734
- WO-A-20/05044619
- DE-A1- 10 012 756

## Beschreibung

Die vorliegende Erfindung betrifft eine Einparkhilfe für ein Kraftfahrzeug und ein Verfahren zum Unterstützen eines Kraftfahrzeugbenutzers beim Einparken eines Kraftfahrzeuges, wobei insbesondere ein semiautonomes Einparksystem Verwendung findet.

Obwohl auf beliebige Fahrzeuge anwendbar, werden die vorliegende Erfindung sowie die ihr zugrunde liegende Problematik in Bezug auf ein Personenkraftfahrzeug näher erläutert.

Die zunehmende Verkehrsdichte und verstärkte Bebauung freier Flächen engen den Verkehrsraum insbesondere in Ballungszentren kontinuierlich ein. Der zur Verfügung stehende Parkraum wird enger und die Suche nach einer geeigneten Parklücke belastet den Fahrer zusätzlich zum immer mehr zunehmenden Verkehr. Speziell in Ballungsgebieten auch höher entwickelter Länder oder Volkswirtschaften wird somit das Parkproblem für Pkws immer gravierender. Der fließende Straßenverkehr wird durch unnötige Fahrten im Rahmen der Parkplatzsuche zudem zusätzlich behindert. Außerdem steigt hierdurch die Emissionsbelastung in der Luft unnötig an.

Bei einem Einparkvorgang ist es die Aufgabe des Kraftfahrzeugbenutzers, abzuschätzen, ob der Parkraum für ein Einparken mit seinem Kraftfahrzeug groß genug ist und ob das Fahrzeug sicher in die Parklücke eingeparkt werden kann. Viele Kraftfahrzeugbenutzer sind sich bei einer Parkplatzsuche nicht sicher, ob ihr Kraftfahrzeug in die Parklücke hineinpasst, die durch abgestellte Kraftfahrzeuge oder andere, fest am Boden verankerte Hindernisse gebildet wird. Zur Erleichterung dieser Abschätzung sind Parklücken-Vermessungssysteme (PLV-Systeme) bekannt, die einer Vermessung der Parklückenabmaße, insbesondere zwischen zwei parkenden Fahrzeugen, dienen. Bei einer Vorbeifahrt erfassen Abstandssensoren zunächst ein erstes stehendes Hindernis, dann die Länge der Parklücke und nachfolgend ein zweites stehendes Hindernis. Anschließend wird dem Kraftfahrzeugbenutzer angezeigt, ob sein Fahrzeug in die Lücke zwischen den Hindernissen hinein passt. Allerdings ist es dem Kraftfahrzeugbenutzer dann selbst überlassen, sein Kraftfahrzeug in die jeweilige Parklücke einzuparken.

Das rückwärtige Einparken eines Kraftfahrzeuges in eine Parklücke ist jedoch eines der schwierigsten Fahrmanöver, die im Verkehr auftreten können. Der Einparkvorgang selbst erfordert ein erhebliches Maß an Übung, so dass insbesondere Anfänger oder auch unsichere Fahrer nicht schnell und problemlos einparken können. Dies führt dazu, dass das Kraftfahrzeug einige Male zurückgesetzt werden muss und entsprechend der nachfolgende Verkehr behindert wird oder es zu Beschädigungen beim Einparken kommen kann.

Gemäß dem Stand der Technik sind semiautonome Einparkassistenten (SPA = Semiautonomous Parking Assistant) bekannt, welche den Kraftfahrzeugbenutzer unterstützen, sein Kraftfahrzeug in einen Parkraum sicher und zügig einzuparken. Dabei werden auf Basis der erfassten, den zur Verfügung stehenden Parkraum darstellenden Daten, der momentanen Kraftfahrzeug-Position und beispielsweise des momentanen Lenkwinkels ein geeigneter Einparkvorgang berechnet, wobei dieser dem Kraftfahrzeugbenutzer durch Vorgabe der erforderlichen Fahr- und/oder Lenkmanöver angezeigt wird. Das semiautonome Einparksystem weist dazu eine Benutzerschnittstelle (HMI) auf, die dem Kraftfahrzeugbenutzer beispielsweise optisch oder akustisch Informationen übermittelt, wie er lenken und Gas geben bzw. bremsen muss, um optimal in die Parklücke einzuparken. Die Abweichungen zur Soll-Trajektorie werden beispielsweise vom Kraftfahrzeugbenutzer selbst oder automatisch abgeglichen.

Um das semiautonome Einpark-Assistentsystem sicher und effizient nutzen zu können, ist eine gewisse Eingewöhnungsphase an die akustischen und optischen Ausgaben des Systems notwendig. Diese Phase wird umso leichter und schneller absolviert, je ausführlicher die Ausgaben sind. Sie sollten quasi selbsterklärend sein, damit der Kraftfahrzeugbenutzer den vom System vorgegebenen Einparkablauf erlernen kann. Andererseits wünschen sich mit dem System vertraute Fahrer jedoch eher spärliche Ausgaben, insbesondere akustischer Art, da diese dann eher als störend empfunden werden. Ferner wünschen unterschiedliche Kraftfahrzeugbenutzer unterschiedliche Ausgabearten, beispielsweise bezüglich einer optischen Informationsausgabe, einer graphischen Darstellungsart und/oder der akustischen Informationsausgabe, da jeder Kraftfahrzeugbenutzer unterschiedliche Einparkfähigkeiten und individuelle Vorlieben bei der Art und Detaillierung der Informationsausgaben besitzt.

Aus der WO03/055734 A1 ist Parkassistenzsystem bekannt, bei dem Sensoren eine Parklücke vermessen und ein Einparkweg in die Parklücke wird berechnet. Das Einparken erfolgt entweder automatisch oder der Fahrer wird über eine akustische oder visuelle Schnittstelle angewiesen, wie er in die Parklücke hineinfahren soll.

Aus der DE 100 12 756 A1 ist ein Verfahren sowie eine Einrichtung zur Abspeicherung und Abrufung individueller Einstellungen von betriebsrelevanten, elektrisch ein- oder verstellbaren Elementen im Kraftfahrzeug mit Hilfe einer multifunktionalen Displaydarstellung bekannt.

Als nachteilig bei den obigen bekannten Ansätzen gemäß dem Stand der Technik hat sich die Tatsache herausgestellt, dass für alle Kraftfahrzeugbenutzer eine einheitliche Informationsausgabe erfolgt, die nicht auf die individuellen Wünsche des jeweiligen Kraftfahrzeugbenutzers angepasst ist. Dadurch herrscht nach wie vor eine geringe Akzeptanz gegenüber derartigen semiautonomenEinparksystemen.

In Anbetracht dessen liegt der vorliegenden Erfindung die Aufgabe zugrunde, eine Einparkhilfe zu schaffen, die eine an die Wünsche der einzelnen Kraftfahrzeugbenutzer individuell angepasste Funktionalität gewährleistet.

### VORTEILE DER ERFINDUNG

Diese Aufgabe wird erfindungsgemäß verfahrensseitig durch die Einparkhilfe mit den Merkmalen des Patentanspruchs 1 sowie verfahrensseitig durch das Verfahren mit den Merkmalen des Patentanspruchs 12 gelöst.

Die der vorliegenden Erfindung zugrunde liegende Idee besteht darin, dass die erfindungsgemäße Einparkhilfe eine Einrichtung zur Erfassung von Daten bezüglich des zur Verfügung stehenden Parkraumes; eine Einpark-Assistenteinrichtung zum Berechnen eines Einpark-Fahrvorgangs auf Basis der erfassten, den zur Verfügung stehenden Parkraum darstellenden Daten, der momentanen Kraftfahrzeugposition und/oder des momentanen Lenkwinkels; eine Kraftfahrzeug-Benutzerschnittstelle, welche dem Kraftfahrzeugbenutzer den berechneten Einpark-Fahrvorgang durch Vorgabe der erforderlichen Fahr- und/oder Lenkmanöver anzeigt; und Auswahlmittel zum Auswählen von auf die Anforderungen des Kraftfahrzeugbenutzers angepassten personalisierten Betriebsmodi der Kraftfahrzeug-Benutzerschnittstelle aufweist.

Somit weist die vorliegende Erfindung gegenüber den bekannten Lösungsansätzen den Vorteil auf, dass die Kraftfahrzeug-Benutzerschnittstelle auf einen derartigen Betriebsmodus bzw. auf derartige Betriebsmodi einstellbar ist, welche an die individuellen Wünsche des momentanen Kraftfahrzeugbenutzers angepasst sind. Somit kann der augenblickliche Kraftfahrzeugbenutzer die Benutzerschnittstelle und somit die Informationsausgabe der Einparkhilfe jederzeit so auswählen, wie es ihm momentan am meisten zusagt. Durch Ändern der Betriebsmodi kann der Kraftfahrzeugbenutzer auch zwischen unterschiedlichen Modi wechseln, so dass seine ursprüngliche Auswahlentscheidung auf einfache Weise korrigiert werden kann. Somit kann im Rahmen einer derartigen Personalisierung jeder Kraftfahrzeugbenutzer in Abhängigkeit von der eigenen Einschätzung seiner Einparkfähigkeiten bzw. des Einpark-Unterstützungswunsches verschiedene Modi wählen, um unterschiedlich stark bei der Einfahrt in die Parklücke unterstützt zu werden oder um eine bestimmte Informationsausgabeart zu erhalten. Die Modi können sich beispielsweise hinsichtlich der Informationen, die sie dem Fahrer geben, als auch hinsichtlich des Grades der Unterstützung des Fahrers oder der Art der Darstellung, der Anzeige, etc. unterscheiden.

In den abhängigen Ansprüchen finden sich vorteilhafte Weiterbildungen und Verbesserungen der im Patentanspruch 1 angegebenen Einparkhilfe sowie des im Patentanspruch 12 angegebenen Verfahrens.

Gemäß einer bevorzugten Weiterbildung ist eine Benutzer-Identifizierungseinrichtung vorgesehen, welche den Kraftfahrzeugbenutzer automatisch beispielsweise aufgrund von biometrischen Daten, elektronischen Schlüsseln, der Sitzposition, oder dergleichen, und/oder aufgrund einer manuellen Eingabe mittels geeigneter Schalter oder einem geeigneten Auswahlmenü identifiziert. Vorteilhaft kann im Falle eines Erkennens eines neuen, d.h. die Einparkhilfe zum ersten Mal verwendenden Kraftfahrzeugbenutzers, automatisch ein Betriebsmodus mit dem höchsten Detaillierungsgrad von den Auswahlmitteln automatisch ausgewählt werden. Dies kann beispielsweise jederzeit noch einmal wiederholt werden, wobei anschließend in einen Standardmodus geschaltet wird, in welchem eine derartige ausführliche Einführung in das System entfällt.

Gemäß einer weiteren bevorzugten Weiterbildung können personalisierte Modi der Benutzerschnittstelle über die Auswahlmittel eingestellt und in einer Speichereinrichtung abgespeichert werden. Vorteilhaft stellt die Benutzerschnittstelle bei Identifizierung eines bestimmten Kraftfahrzeugbenutzers automatisch die in der Speichereinrichtung abgespeicherten, zugeordneten und personalisierten Modi ein. Somit wählt das System automatisch die an die Bedürfnisse des momentanen Kraftfahrzeugbenutzers angepassten Betriebsmodi aus. Die Akzeptanz gegenüber derartigen Systemen kann erheblich vergrößert werden, da die jeweilige Erfahrung des Kraftfahrzeugbenutzers mit der Einparkhilfe bei den entsprechenden Vorgaben bzw. Anweisungen berücksichtigt wird.

Erfindungsgemäß weist die Benutzerschnittstelle eine optische Anzeigeeinrichtung und/oder eine akustische Sprachausgabeeinrichtung zum Vorgeben der erforderlichen Fahr- und/oder Lenkmanöver für den berechneten Einpark-Fahrvorgang auf. Dabei können sich die auszuwählenden Betriebsmodi hinsichtlich ihrer Informationsart, ihres Informations-Detaillierungsgrades, ihres optischen Erscheinungsbildes der optischen Anzeigeeinrichtung, ihres akustischen Erscheinungsbildes der akustischen Sprachausgabeeinrichtung und/oder ihrer gesamten Darstellungsart, oder dergleichen unterscheiden. Dies stellt gegenüber dem Stand der Technik ferner den Vorteil dar, dass bei weniger geübten Fahrern beispielsweise ausführliche akustische und optische Kommandos und eine detaillierte Darstellung des Einparkvorgangs auf der Anzeigeeinrichtung erfolgt. Bei erfahreneren Kraftfahrzeugbenutzern kann lediglich ein Piepton als Anhaltehinweis gegeben werden, wobei die Lenkung dem erfahrenen Fahrer nicht mitgeteilt wird. Beispielsweise kann eine optische Darstellung auch auf eine Darstellung vergleichbar der im Parkpilot angewendeten beschränkt werden. Somit kann verhindert werden, dass unerfahrene Benutzer hilflos vor dem System sitzen, während versierte Benutzer aufgrund der vielen für sie störenden Hinweistöne schnell genervt reagieren. Dem versierten Kraftfahrzeugbenutzer werden nur noch die wirklich notwendigen Informationen zum Einparken gegeben, wobei er optional eine detaillierte Führung auswählen kann. Damit wird eine geringere Überfrachtung des Kraftfahrzeugbenutzers mit optischen und akustischen Informationen gewährleistet. Ferner kann das akustische Erscheinungsbild, beispielsweise Töne, Sprache, Musik, oder dergleichen auf den Kraftfahrzeugbenutzer personalisiert und individuell angepasst werden. Ähnliches gilt für die optische Darstellung, wobei beispielsweise der Fortschritt des Einparkvorgangs, die Soll- und IstStellung der Räder, etc. auf der Anzeigeeinrichtung dargestellt werden können. Alternativ können auch Fadenkreuze zur Darstellung von Soll- und Ist-Stellungen des Kraftfahrzeuges bzw. der Räder zur optischen Darstellung verwendet werden. Die genaue Art der Töne, die Stimme der Sprachausgabe, die Farbe und Form der angezeigten Elemente können ebenfalls benutzerangepasst für die Auswahlmittel ausgewählt werden, so dass eine Akzeptanz des Systems verbessert wird.

Gemäß einem weiteren bevorzugten Ausführungsbeispiel erhält der Kraftfahrzeugbenutzer in einem auszuwählenden Betriebsmodus sequentiell Vorgaben der erforderlichen Fahr- und/oder Lenkmanöver, wobei die Einparkhilfe Lenkmanöver-Vorgaben nur in Standzuständen des Kraftfahrzeuges und Fahrmanöver-Vorgaben nur bei gleichbleibendem Lenkwinkel erteilt. Somit ist das geführte Einparkmanöver auch für den ungeübten Kraftfahrzeugbenutzer leicht verständlich und leicht durchführbar. Alternativ erhält der Kraftfahrzeugbenutzer in einem weiteren auszuwählenden Betriebsmodus lediglich Informationen über den Zeitpunkt eines Lenkmanövers. Dabei wird vorausgesetzt, dass der Fahrer schon eine Vorstellung über den Verlauf des Einparkmanövers besitzt, so dass dieser Modus eher für geübte Fahrer geeignet ist, welche das System bereits kennengelernt haben. Ein weiterer beispielhafter Betriebsmodus besteht darin, dass der Kraftfahrzeugbenutzer dynamisch sowohl Fahrmanöver-Vorgaben als auch gleichzeitig Lenkmanöver-Vorgaben erhält. Dies stellt eine passive Unterstützung mit kontinuierlicher Lenkbewegung dar, weil der Fahrer dynamisch während der Einfahrt in die Parklücke lenken und nicht an den Haltepunkten anhalten muss. In einem weiteren exemplarischen Betriebsmodus erhält der Kraftfahrzeugbenutzer lediglich sequentiell Fahrmanöver-Vorgaben, wobei die Einparkhilfe automatisch die Lenkmanöver durchführt. Der Kraftfahrzeugbenutzer ist lediglich für das Fahrmanöver verantwortlich, d.h. er muss lediglich das Gas- und das Bremspedal entsprechend betätigen. Durch derart unterschiedliche Betriebsmodi wird das System durch entsprechende Auswahl eines geeigneten Betriebsmodus auf die personalisierten Wünsche des augenblicklichen Kraftfahrzeugbenutzers angepasst und optimiert.

### ZEICHNUNGEN

Ausführungsbeispiele der Erfindung sowie vorteilhafte Weiterbildungen sind in den Figuren der Zeichnung dargestellt und in der nachfolgenden Beschreibung näher erläutert.

In den Figuren zeigen:
Fig. 1 eine schematische Darstellung einer Einparkhilfe gemäß einem Ausführungsbeispiel der vorliegenden Erfindung;
Fig. 2 eine schematische Darstellung eines ersten graphischen Darstellungsmodus gemäß einem Ausführungsbeispiel der vorliegenden Erfindung; und
Fig. 3 eine schematische Darstellung eines ersten graphischen Darstellungsmodus gemäß einem weiteren Ausführungsbeispiel der vorliegenden Erfindung.

### BESCHREIBUNG DER AUSFÜHRUNGSBEISPIELE

In den Figuren bezeichnen gleiche Bezugszeichen gleiche oder funktionsgleiche Komponenten, soweit nichts Gegenteiliges angegeben ist.

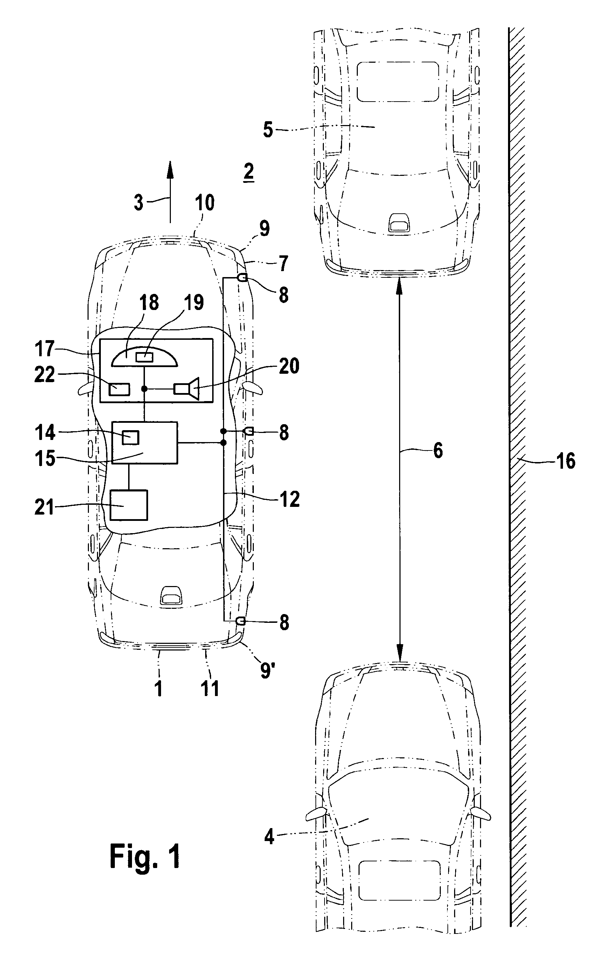

Die erfindungsgemäße Einparkhilfe kann für beliebige Fahrzeuge verwendet werden, findet jedoch insbesondere bei Personenkraftfahrzeugen Verwendung. In Fig. 1 ist ein Kraftfahrzeug 1 dargestellt, das sich auf einer Straße 2 in einer durch einen Pfeil dargestellten Fahrtrichtung 3 bewegt. Zwischen einem ersten Fahrzeug 4 und einem zweiten Fahrzeug 5 befindet sich eine Parklücke 6, deren Länge ebenfalls durch Pfeile skizziert ist. Rein exemplarisch sind an der rechten Fahrzeugseite 7 des Kraftfahrzeuges 1 drei Abstandssensoren 8 angeordnet, die als eine Messeinheit zur Abstandsmessung dienen. Vorteilhaft befinden sich im Vorderbereich als auch im Heckbereich des Kraftfahrzeuges 1 jeweils sechs Abstandssensoren 8, um die Parklücke 6 vor dem Einparken zu vermessen und während des Einparkens zu überwachen. Die Abstandssensoren 8 sind bevorzugt als Ultraschallsensoren ausgeführt, die ein Ultraschallsignal aussenden, das reflektierte Ultraschallsignal empfangen und aus der Laufzeit des Ultraschallsignals einen Abstand des Kraftfahrzeuges 1 zu Hindernissen neben dem Kraftfahrzeug 1 bestimmen. Anstelle von Ultraschallsensoren können selbstverständlich auch Sensoren verwendet werden, die andere Wellensignale aussenden, insbesondere elektromagnetische Wellen, z.B. Radarwellen, oder dergleichen.

In Fig. 1 sind drei Abstandssensoren 8 exemplarisch dargestellt. Neben den oder anstatt der in Fig. 1 gezeigten Abstandssensoren 8 können auch Abstandssensoren verwendet werden, die auf den Fahrzeugecken 9, 9' montiert sind und deren Strahlkegel ungefähr um 45° gegen die Fahrzeugvorderseite 10 bzw. die Fahrzeugrückseite 11 und der rechten Fahrzeugseite 7 geneigt sind. Für ein Einparken an der linken Fahrzeugseite können dort selbstverständlich ergänzend weitere Abstandssensoren angeordnet sein, die jedoch aus Gründen der Übersichtlichkeit in der Fig. 1 nicht dargestellt sind.

Über Datenleitungen 12 sind die Abstandssensoren 8 mit einer Einpark-Assistenteinrichtung 15 verbunden. Die Einpark-Assistenteinrichtung 15 erfasst bei der Vorbeifahrt des Kraftfahrzeuges 1 der Parklücke 6 sowohl die von den Abstandssensoren 8 erfassten Messdaten und ordnet diese mittels Wegstreckensignalen einer jeweiligen Position des Kraftfahrzeuges 1 zu. Die Einpark-Assistenteinrichtung 15 berechnet auf Grundlage der erfassten, den zur Verfügung stehenden Parkraum 6 darstellenden Daten, der momentanen Kraftfahrzeugposition und/oder des momentanen Lenkwinkels sowie beispielsweise des Abstandes zu dem die Parklücke 6 begrenzenden Bürgersteig 16 den optimalen Einpark-Fahrvorgang.

Die Einpark-Assistenteinrichtung 15 weist ferner eine Speichereinrichtung 14 zum Abspeichern voreingestellter oder individuell ausgewählter bzw. eingestellter Betriebsmodi auf. Das Einparkhilfe-System gemäß dem vorliegenden Ausführungsbeispiel weist ferner eine Benutzerschnittstelle 17 auf, die beispielsweise aus einer optischen Anzeigeeinrichtung 18 und einer akustischen Anzeigeeinrichtung 20 besteht. Dabei ist die optische Anzeigeeinrichtung 18 vorteilhaft als Bestandteil des Kombi-Instrumentes des Kraftfahrzeuges und die akustische Anzeigeeinrichtung 20 als mindestens ein Mikrofon, beispielsweise die für die Stereoanlage oder das Navigationssystem vorgesehene Lautsprecher, ausgebildet. Die optische Anzeigeeinrichtung 18 weist demnach vorzugsweise ein Display zum graphischen Darstellen der optischen Vorgabe der erforderlichen Fahr- und/oder Lenkmanöver zum Erfüllen des berechneten optimierten Einpark-Fahrvorgangsauf.

Ferner umfasst die Benutzerschnittstelle 17 Auswahlmittel 22 zum Auswählen der angepassten personalisierten Betriebsmodi der Benutzerschnittstelle 17. Dabei können die Auswahlmittel 22 beispielsweise als Schalter an dem Bedienfeld des Kombi-Instrumentes des Kraftfahrzeuges 1 und/oder als Bestandteil einer Programmsteuerung vorgesehen sein. An dieser Stelle sei darauf hingewiesen, dass unter Auswahlmittel 22 im Sinne der vorliegenden Erfindung sowohl durch den Kraftfahrzeugbenutzer manuell betätigbare Auswahlmittel als auch durch das System automatisch aktivierte Auswahlmittel umfasst sind, durch welche entweder manuell oder automatisch bestimmte Betriebsmodi der Benutzerschnittstelle 17 ausgewählt werden.

Die Einparkhilfe gemäß dem vorliegenden Ausführungsbeispiel weist ferner vorzugsweise eine Benutzer-Identifizierungseinrichtung 21 zur Identifizierung des momentanen Kraftfahrzeugbenutzers auf. Hierfür sind verschiedene Ausgestaltungsmöglichkeiten denkbar, wie beispielsweise eine automatische Identifikation aufgrund von biometrischen Daten, eine Identifikation aufgrund von elektronischen Schlüsseln, der Sitzposition, eine manuelle Identifikation durch den Fahrer mittels geeigneter Schalter oder einem geeigneten Auswahlmenü, oder dergleichen. Somit ist es möglich, dass verschiedenen Kraftfahrzeugbenutzern unterschiedliche Betriebsmodi der Benutzerschnittstelle 17 in der Speichereinrichtung 14 abgespeichert und einem identifizierten Benutzer zugeordnet werden, so dass bei einer Identifikation des Kraftfahrzeugbenutzers die Benutzerschnittstelle mit den auf die Bedürfnisse des augenblicklichen Kraftfahrzeugbenutzers angepassten Betriebsmodi oder die speziell ausgewählten Betriebsmodi automatisch eingestellt wird.

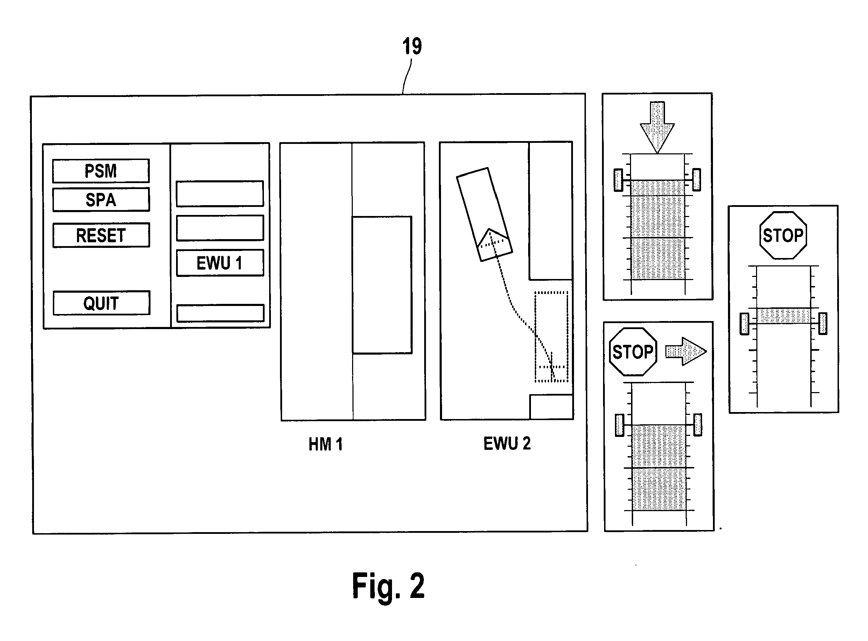

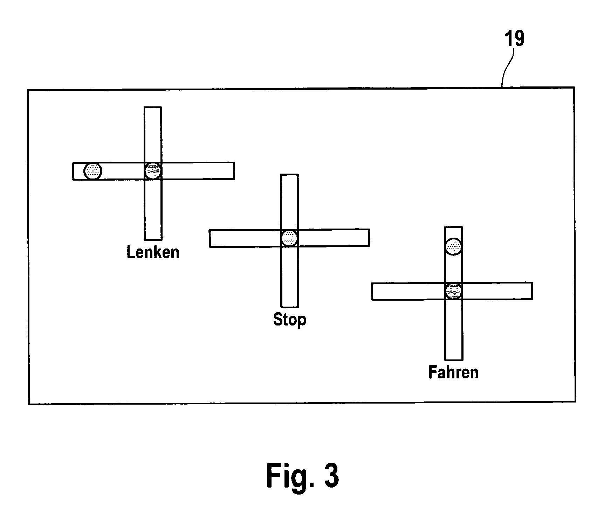

Im folgenden werden, teilweise unter Bezugnahme auf die Fig. 2 und 3, bevorzugte Ausführungsbeispiele für Betriebsmodi der Benutzerschnittstelle 17 näher erläutert.

Die Benutzerschnittstelle 17 kann ausführliche akustische und optische Kommandos geben, beispielsweise verschiedene Töne je Situation, wie beispielsweise Wam-/Hinweistöne. Ferner kann ein Modus darin bestehen, dass eine Sprachausgabe zur detaillierten oder weniger detaillierten Darstellung des Einparkvorgangs erfolgt, wie beispielsweise Lenkanweisungen "links", "rechts", "Stop", etc.

Zudem können auf der optischen Anzeigeeinrichtung 18 optische detaillierte Darstellungen in einem weiteren Betriebsmodus dargestellt werden, wie beispielsweise in Fig. 2 ersichtlich ist. Dabei wird der Kraftfahrzeugbenutzer durch eine graphische detaillierte Darstellung auf die unterschiedlichen Fahr- und Lenkmanöver hingewiesen. Alternativ kann die Benutzerschnittstelle 17 auch lediglich einen Piepton oder dergleichen als Anhaltehinweis geben, wobei die Lenkung dem erfahrenen Fahrer klar ist und ihm in diesem Ausführungsbeispiel nicht mitgeteilt wird. In diesem Fall kann die optische Anzeigeeinrichtung 18 der Benutzerschnittstelle 17 auch auf eine Darstellung vergleichbar der im Parkpilot beschränkt werden.

Weitere Modi der Benutzerschnittstelle 17 unterscheiden sich vorzugsweise hinsichtlich des Detaillierungsgrades der Informationsausgaben. Beispielsweise wird immer dann eine ausführliche Einführung in das System gegeben, z.B. durch Erklärungen mittels Sprachausgabe über die akustische Anzeigeeinrichtung 20 oder mittels graphischer Ausgabe über die optische Anzeigeeinrichtung 18, wenn ein neuer Kraftfahrzeugbenutzer identifiziert wird, d.h. ein Kraftfahrzeugbenutzer, der das System bisher noch nicht verwendet hat. Dies kann jederzeit noch einmal wiederholt werden, bis beispielsweise ein gewisser Lernprozess vorhanden ist. Anschließend wird beispielsweise in einen StandardModus geschaltet, in dem diese ausführliche Einführung in die Einparkhilfe entfällt. Werden hingegen versierte Kraftfahrzeugbenutzer durch die Benutzer-Identifizierungseinrichtung 21 identifiziert, können diese beispielsweise den Grad der Detaillierung der Ausgabeinformationen wählen, d.h. wie detailliert die Kommandos bzw. Vorgaben bezüglich der Lenk- und Fahrmanöver ausgegeben werden. Durch eine Unterscheidung der Modi hinsichtlich des Detaillierungsgrades werden dem Kraftfahrzeugbenutzer lediglich die wirklich notwendigen Informationen zum Einparken gegeben, wobei optional über die Auswahlmittel 22 eine detaillierte Führung ausgewählt werden kann.

Somit kann ein derartiger Modus gewährleisten, dass jeder "neue" Kraftfahrzeugbenutzer wenigstens einmal die ausführliche Einführung in das System über sich ergehen lassen muss, wodurch eine Bedienungsanleitung, die möglicherweise ohnehin nicht gelesen wird, ersetzt wird.

Beispielsweise können sich die auszuwählenden Betriebsmodi alternativ oder zusätzlich zu dem Informations-Detaillierungsgrad und der Informationsart auch hinsichtlich ihrer optischen Erscheinungsbilder, ihrer akustischen Erscheinungsbilder und/oder ihrer Darstellungsart unterscheiden.

Fig. 2 illustriert eine Darstellungsart der Fahr- und Lenkmanöver-Vorgaben gemäß einem bevorzugten Ausführungsbeispiel, welche beispielsweise auf dem Display 19 der optischen Anzeigeeinrichtung 18 dargestellt ist. Wie in Fig. 2 ersichtlich ist, wird der Kraftfahrzeugbenutzer über den Fortschritt des Einparkvorgangs, die Soll- und IstStellung der Kraftfahrzeugräder und vieles mehr mittels graphischer Darstellungen, wie Pfeile, Skalen und Symbole, optisch informiert.

In Fig. 3 ist eine weitere Darstellungsart, d.h. ein weiterer Betriebsmodus, illustriert, der sich hinsichtlich des in Fig. 2 dargestellten Betriebsmodus in der graphischen Darstellung der Information unterscheidet. Hierbei wird der Kraftfahrzeugbenutzer über beispielsweise ein Fadenkreuz und farbliche Punkte zum Lenken bzw. Fahren in entsprechende Richtungen bzw. zum Bremsen und Anhalten des Kraftfahrzeuges graphisch aufgefordert.

Es ist für einen Fachmann offensichtlich, dass die in den Fig. 2 und 3 dargestellten Betriebsmodi lediglich exemplarisch aufgeführt sind, wobei selbstverständlich weitere Betriebsmodi hinsichtlich der Darstellungsart, der Informationsart, des Informations-Detaillierungsgrades, sowie des akustischen Erscheinungsbildes in dem Umfang der vorliegenden Erfindung mitumfasst sind, wie oben bereits erläutert.

Das optische Erscheinungsbild kann somit vorzugsweise vom Kraftfahrzeugbenutzer weitgehend an seine Wünsche angepasst werden, wobei beispielsweise der Hintergrund, Farben, Texturen, fertige graphische Ausgestaltungen, Anordnung der Elemente, etc. individuell über die Auswahlmittel gewählt bzw. bestimmte Kombinationen spezieller Betriebsmodi vorab in der Speichereinrichtung 14 abgespeichert werden können. Ebenfalls kann die Art der Benutzeroberfläche bzw. der graphischen Darstellung, die sich beispielsweise in den Ausführungsbeispielen der Fig. 2 und 3 erheblich unterscheidet, frei gewählt werden. Beispielsweise können neue Modi vom Hersteller bezogen und/oder in dem System installiert werden. Gleiches gilt selbstverständlich für das akustische Erscheinungsbild, wobei beispielsweise Töne, Sprachen, Musik, etc. für die unterschiedlichen Informationsarten und Lenk- bzw. Fahrmanöver ausgewählt werden können. Somit kann der Kraftfahrzeugbenutzer sich einen Betriebsmodus der Benutzerschnittstelle 17 derart zusammenstellen und auswählen, welcher ihm am meisten zusagt. Selbstverständlich kann er seinen einmal eingegebenen Modus jederzeit modifizieren und wiederum in der Speichereinrichtung 14 abspeichern.

Vorzugsweise weist die Einparkhilfe derartige voreingestellte oder selbst zusammengestellte Modi auf, dass jeder Kraftfahrzeugbenutzer im Rahmen der Personalisierung in Abhängigkeit von der eigenen Einschätzung seiner Einparkfähigkeiten bzw. des Einpark-Unterstützungswunsches geeignete Modi auswählen kann, um unterschiedlich stark bei der Einfahrt in die Parklücke 6 unterstützt zu werden.

Beispielsweise sieht ein weiterer beispielhafter auszuwählender Modus eine passive Unterstützung des Kraftfahrzeugbenutzers mit ausführlichen Informationen vor. Der Benutzer erhält sequentiell Anweisungen bzw. Informationen zum Fahren, Halten oder Lenken, wobei nur in Standzuständen bzw. Haltepunkten des Kraftfahrzeuges Anweisungen zum Lenken gegeben werden und während der Fahrt das Lenkrad mit gleichbleibendem Winkel festgehalten wird. Das geführte Einparkmanöver ist insbesondere für einen ungeübten Fahrer gedacht, da es leicht verständlich und durchführbar ist.

Bei einem weiteren Modus erhält der Kraftfahrzeugbenutzer passive Unterstützung mit reduzierten Informationen. Der Benutzer erhält dabei nur noch Informationen über den Zeitpunkt des Umlenkens. Dabei wird vorausgesetzt, dass der Fahrer schon eine Vorstellung über den Verlauf des Einparkmanövers besitzt. Dieser Modus ist insbesondere für geübte Fahrer geeignet, die das System bereits kennengelernt haben.

Ein weiterer Modus sieht eine passive Unterstützung des Kraftfahrzeugbenutzers mit kontinuierlicher Lenkbewegung vor. Der Benutzer muss dynamisch während der Einfahrt in die Parklücke 6 lenken, wobei er hierbei nicht an den Haltepunkten anhalten muss.

Allerdings muss er sich relativ genau an die dynamischen Anweisungen bzw. Vorgaben halten, um nicht zu stark von der optimalen Trajektorie abzuweichen. Den Fahrvorgang, d.h. Gasgeben und Bremsen, muss der Kraftfahrzeugbenutzer ebenfalls selbst ausführen.

In einem weiteren beispielhaften Modus ist eine Lenk-Unterstützung für den Kraftfahrzeugbenutzer vorgesehen. Dabei nimmt die Einparkhilfe eine automatische Lenkung selbst vor, d.h. der Fahrer braucht lediglich Gas zu geben und ist lediglich für das Bremsen verantwortlich. Vorzugsweise kann diese Funktionalität optional eingestellt werden, damit der Kraftfahrzeugbenutzer bei Unbehagen einer automatischen Lenkung die Möglichkeit besitzt, in die Lenkung auf Basis der Vorgaben des semiautonomen Einparksystems zu reagieren.

Somit schafft die vorliegende Erfindung eine Einparkhilfe und ein Verfahren zum Unterstützen eines Kraftfahrzeugbenutzers beim Einparken eines Kraftfahrzeuges, mit welchen verschiedene Kraftfahzeugbenutzer eine an ihre individuellen Bedürfnisse angepasste Einpark-Unterstützung auswählen können. Ferner können die Benutzer entweder selbst bestimmte Modi des semiautonomen Einparksystems einstellen, welche sich in den unterschiedlichsten Arten unterscheiden können. Andererseits können auch vorab gespeicherte Modi bei einem automatischen Identifizieren oder einem manuellen Identifizieren des Kraftfahrzeugbenutzers automatisch diesem Benutzer zugewiesen werden, so dass eine erneute Auswahl bestimmter Modi nicht bei jedem Gebrauch des Kraftfahrzeuges notwendig ist, sondern lediglich einmal eingestellt bzw. ausgewählt werden müssen. Der Vorteil der vorab beschriebenen Erfindung besteht darin, dass unterschiedliche Einpark-Unterstützungswünsche bzw. Einparkfähigkeiten auch unterschiedliche starke Fahrassistenz erfordern. Bietet man beispielsweise weniger erfahrenen Fahrern nur ein System mit dynamischer Führung auf der Einpark-Trajektorie in die Parklücke an, kann dies leicht dazu führen, dass sich diese Fahrergruppe von dem Einparkassistenten aufgrund der Informationsflut an den Benutzer überfordert fühlt. Bietet man hingegen versierten Einparkern, die die Einparkhilfe allerdings auch in schwierigen Situationen nutzen möchten, nur ein Lenken an Stop-Punkten an, kann dies andererseits dazu führen, dass diese Fahrergruppe sich unterfordert fühlt. Aus den genannten Gründen ist die Möglichkeit einer Personalisierung, wie sie gemäß der vorliegenden Erfindung aufgrund der Auswahlmittel zum Auswählen bestimmter Modi beschrieben wurden, äußerst vorteilhaft und kann dazu beitragen, dass die Einparksysteme weiter an Akzeptanz gewinnen.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Es ist für einen Fachmann offensichtlich, dass auch auf andere Art und Weise über die Benutzerschnittstelle 17 Vorgabe-Informationen an den Benutzer neben optisch und akustisch ausgegeben werden können, wie beispielsweise haptisch oder dergleichen.

## Patentansprüche

1. Einparkhilfe für ein Kraftfahrzeug (1) mit:
- einer Einrichtung (8) zur Erfassung von Daten bezüglich des zur Verfügung stehenden Parkraumes (6);
- einer Einpark-Assistenteinrichtung (15) zum Berechnen eines Einpark-Fahrvorgangs auf Basis der erfassten, den zur Verfügung stehenden Parkraum (6) darstellenden Daten, der momentanen Kraftfahrzeugposition und/oder des momentanen Lenkwinkels;
- einer Kraftfahrzeug-Benutzerschnittstelle (17), welche dem Kraftfahrzeugbenutzer den berechneten Einpark-Fahrvorgang durch Vorgabe der erforderlichen Fahr- und/oder Lenkmanöver anzeigt,
- wobei die Benutzerschnittstelle (17) eine optische Anzeigeeinrichtung (18) und/oder eine akustische Sprachausgabeeinrichtung (20) zum Vorgeben der erforderlichen Fahr- und/oder Lenkmanöver für den berechneten Einpark-Fahrvorgang aufweist,
- **gekennzeichnet durch** Auswahlmittel (22) zum Auswählen von auf die Anforderungen des Kraftfahrzeugbenutzers angepassten personalisierten Betriebsmodi der Kraftfahrzeug-Benutzerschnittstelle (17), wobei sich die auszuwählenden Betriebsmodi hinsichtlich ihrer Informations-Detaillierungsgrade unterscheiden.

2. Einparkhilfe nach Anspruch 1, **dadurch gekennzeichnet, dass** mindestens eine Benutzer-Identifizierungseinrichtung (21) vorgesehen ist, welche den Kraftfahrzeugbenutzer automatisch beispielsweise aufgrund von biometrischen Daten, elektronischen Schlüsseln, körperlichen Maßen, Sitzeinstellungen oder dergleichen, und/oder aufgrund einer manuellen Eingabe mittels geeigneter Schalter oder einem geeigneten Auswahlmenü identifiziert.

3. Einparkhilfe nach Anspruch 1 oder 2, **dadurch gekennzeichnet, dass** sich die auszuwählenden Betriebsmodi ferner hinsichtlich ihrer Informationsarten, ihrer optischen Erscheinungsbilder, ihrer akustischen Erscheinungsbilder und/oder ihrer Darstellungsarten, oder dergleichen unterscheiden.

4. Einparkhilfe nach wenigstens einem der vorhergehenden Ansprüche, **dadurch gekennzeichnet, dass** in einem auszuwählenden Betriebsmodus der Kraftfahrzeugbenutzer sequentiell Vorgaben der erforderlichen Fahr- und/oder Lenkmanöver erhält, wobei die Einparkhilfe Lenkmanöver-Vorgaben nur in Standzuständen des Kraftfahrzeuges (1) und Fahrmanöver-Vorgaben nur bei gleichbleibendem Lenkwinkel erteilt.

5. Einparkhilfe nach wenigstens einem der vorhergehenden Ansprüche, **dadurch gekennzeichnet, dass** in einem auszuwählenden Betriebsmodus der Kraftfahrzeugbenutzer lediglich Informationen über den Zeitpunkt eines Lenkmanövers erhält.

6. Einparkhilfe nach wenigstens einem der vorhergehenden Ansprüche, **dadurch gekennzeichnet, dass** der Kraftfahrzeugbenutzer dynamisch sowohl Fahrmanöver-Vorgaben als auch gleichzeitig Lenkmanöver-Vorgaben erhält.

7. Einparkhilfe nach wenigstens einem der vorhergehenden Ansprüche, **dadurch gekennzeichnet, dass** der Kraftfahrzeugbenutzer lediglich sequentiell Fahrmanöver-Vorgaben erhält, wobei die Einparkhilfe automatisch die Lenkmanöver durchführt.

8. Einparkhilfe nach wenigstens einem der vorhergehenden Ansprüche, **dadurch gekennzeichnet, dass** im Falle eines Erkennens eines neuen, die Einparkhilfe zum ersten Mal verwendenden Kraftfahrzeugbenutzers die Auswahlmittel (22) automatisch den Betriebsmodus mit dem höchsten Detaillierungsgrad auswählt.

9. Einparkhilfe nach wenigstens einem der vorhergehenden Ansprüche, **dadurch gekennzeichnet, dass** personalisierte Modi der Benutzerschnittstelle (17) vorab einstellbar und in einer Speichereinrichtung (14) abspeicherbar sind.

10. Einparkhilfe nach Anspruch 9, **dadurch gekennzeichnet, dass** die Benutzerschnittstelle (17) bei Identifizierung eines bestimmten Kraftfahrzeugbenutzers automatisch vorab in der Speichereinrichtung (14) abgespeicherte personalisierte Modi einstellt.

11. Einparkhilfe nach wenigstens einem der vorhergehenden Ansprüche, **dadurch gekennzeichnet, dass** die Auswahlmittel (22) an dem Bedienfeld eines Kombi-Instrumentes des Kraftfahrzeuges (1) und/oder als Bestandteil einer Programmsteuerung vorgesehen sind.

12. Verfahren zum Unterstützen eines Kraftfahrzeugbenutzers beim Einparken eines Kraftfahrzeuges (1),
wobei Daten bezüglich des zur Verfügung stehenden Parkraumes (6) mittels einer Erfassungseinrichtung (8) erfasst werden;
wobei ein Einpark-Fahrvorgang auf Basis der erfassten, den zur Verfügung stehenden Parkraum (6) darstellenden Daten, der momentanen Kraftfahrzeugposition und/oder des momentanen Lenkwinkels mittels einer Einpark-Assistenteinrichtung (15)berechnet wird;
wobei ein auf die Anforderungen des Kraftfahrzeugbenutzers angepasster personalisierter Betriebsmodus einer Kraftfahrzeug-Benutzerschnittstelle (17) mittels Auswahlmittel (22) ausgewählt wird,
wobei die auszuwählenden Betriebsmodi unterschiedliche Informations-Detaillierungsgrade aufweisen,
und wobei über eine optische Anzeigeeinrichtung (18) und/oder eine akustische Sprachausgabeeinrichtung (20) der Kraftfahrzeug-Benutzerschnittstelle (17) erforderliche Fahr- und/oder Lenkmanöver für den berechneten Einpark-Fahrvorgang entsprechend dem ausgewählten Betriebsmodus vorgegeben werden.

13. Verfahren nach Anspruch 12, **gekennzeichnet durch** Identifizieren des Kraftfahrzeugbenutzers mittels einer Benutzer-Identifizierungseinrichtung (21); und automatisch Auswählen von auf die Anforderungen des Kraftfahrzeugbenutzers angepassten personalisierten Betriebsmodi der Kraftfahrzeug-Benutzerschnittstelle (17) mittels Auswahlmitteln (22).

14. Verfahren nach Anspruch 13, **dadurch gekennzeichnet, dass** der Kraftfahrzeugbenutzer automatisch beispielsweise aufgrund von biometrischen Daten, elektronischen Schlüsseln, von Körpermaßen, der Sitzposition oder dergleichen, und/oder aufgrund einer manuellen Eingabe mittels geeigneter Schalter oder einem geeigneten Auswahlmenü mittels der Benutzer-Identifizierungseinrichtung (21) identifiziert wird.

15. Verfahren nach einem der Ansprüche 12 bis 14, **dadurch gekennzeichnet, dass** die auszuwählenden Betriebsmodi ferner mit unterschiedlichen Informationsarten, optischen Erscheinungsbildern, akustischen Erscheinungsbildern und/oder Darstellungsarten ausgestaltet werden.

16. Verfahren nach wenigstens einem der Ansprüche 12 bis 15, **dadurch gekennzeichnet, dass** vorbestimmte personalisierte Modi der Benutzerschnittsteile (17) durch den Kraftfahrzeugbenutzer vorab eingestellt und in einer Speichereinrichtung (14) abgespeichert werden.

## Claims

1. Parking assistance system for a motor vehicle (1) having:
- a device (8) for acquiring data on the available parking space (6);
- a parking assistance device (15) for calculating a parking process on the basis of the acquired data representing the available parking space (6), the instantaneous position of the motor vehicle and/or the instantaneous steering angle;
- a motor vehicle user interface (17) which displays and/or indicates the calculated parking process to the motor vehicle user by predefining the necessary driving and/or steering manoeuvres,
- wherein the user interface (17) has a visual display device (18) and/or an acoustic voice output device (20) for predefining the necessary driving and/or steering manoeuvres for the calculated parking process,
- **characterized by** selection means (22) for selecting personalized operating modes of the motor vehicle user interface (17) which are adapted to the requirements of the motor vehicle user, wherein the operating modes to be selected differ in terms of their degrees of detailing of information.

2. Parking assistance system according to Claim 1, **characterized in that** at least one user identification device (21) is provided which identifies the motor vehicle user automatically on the basis of, for example, biometric data, electronic keys, body dimensions, seat settings or the like and/or on the basis of a manual input by means of suitable switches or a suitable selection menu.

3. Parking assistance system according to Claim 1 or 2, **characterized in that** the operating modes to be selected also differ in terms of their types of information, the appearance of their visual images, their acoustic forms and/or their methods of presentation or the like.

4. Parking assistance system according to at least one of the preceding claims, **characterized in that** in an operating mode which is to be selected the motor vehicle user sequentially receives predefinitions of the necessary driving and/or steering manoeuvres, wherein the parking assistance system issues steering manoeuvre predefinitions only in stationary states of the motor vehicle (1) and issues driving manoeuvre predefinitions only when the steering angle remains the same.

5. Parking assistance system according to at least one of the preceding claims, **characterized in that** in an operating mode which is to be selected the motor vehicle user only receives information about the time of a steering manoeuvre.

6. Parking assistance system according to at least one of the preceding claims, **characterized in that** the motor vehicle user dynamically receives both driving manoeuvre predefinitions and simultaneously steering manoeuvre predefinitions.

7. Parking assistance system according to at least one of the preceding claims, **characterized in that** the motor vehicle user only receives driving manoeuvre predefinitions sequentially, wherein the parking assistance system automatically carries out the steering manoeuvres.

8. Parking assistance system according to at least one of the preceding claims, **characterized in that,** if a new motor vehicle user who is using the parking assistance system for the first time is detected, the selection means (22) automatically selects the operating mode with the highest degree of detailing.

9. Parking assistance system according to at least one of the preceding claims, **characterized in that** personalized modes of the user interface (17) can be set in advance and stored in a memory device (14).

10. Parking assistance system according to Claim 9, **characterized in that,** when a specific motor vehicle user is identified, the user interface (17) automatically sets in advance personalized modes which are stored in the memory device (14).

11. Parking assistance system according to at least one of the preceding claims, **characterized in that** the selection means (22) are provided on the operator control panel of a combination instrument of the motor vehicle (1) and/or as a component of a program controller.

12. Method for assisting a motor vehicle user when parking a motor vehicle (1),
wherein data on the available parking space (6) is acquired by means of an acquisition device (8);
wherein a parking process is calculated on the basis of the acquired data representing the available parking space (6), the instantaneous position of the motor vehicle and/or the instantaneous steering angle by means of a parking assistance device (15);
wherein a personalized operating mode, adapted to the requirements of the motor vehicle user, of a motor vehicle user interface (17) is selected using selection means (22),
wherein the operating modes to be selected have different degrees of detailing of information,
and wherein driving and/or steering manoeuvres which are necessary for the calculated parking process are predefined in accordance with the selected operating mode by means of a visual display device (18) and/or an acoustic voice output device (20) of the motor vehicle user interface (17).

13. Method according to Claim 12, **characterized by** identification of the motor vehicle user by means of a user identification device (21); and automatic selection of personalized operating modes, adapted to the requirements of the motor vehicle user, of the motor vehicle user interface (17) using selection means (22).

14. Method according to Claim 13, **characterized in that** the motor vehicle user is identified by means of the user identification device (21), automatically on the basis of, for example, biometric data, electronic keys, body dimensions, the sitting position or the like, and/or on the basis of a manual input by means of suitable switches or a suitable selection menu.

15. Method according to one of Claims 12 to 14, **characterized in that** the operating modes to be selected are also configured with different types of information, appearance of visual images, acoustic forms and/or methods of presentation.

16. Method according to at least one of Claims 12 to 15, **characterized in that** predetermined personalized modes of the user interface (17) are set in advance by the motor vehicle user and stored in a memory device (14).

## Revendications

1. Système d'assistance de stationnement pour un véhicule automobile (1) comprenant :
- une installation (8) pour saisir des données concernant l'emplacement de stationnement (6), disponible,
- une installation d'assistance de stationnement (15) pour calculer une manoeuvre de stationnement fondée sur les données représentant l'emplacement de stationnement (6) disponible, la position instantanée du véhicule automobile et/ou l'angle de braquage instantané,
- une interface utilisateur/véhicule (17) qui indique à l'utilisateur du véhicule automobile, la manoeuvre de conduite de stationnement calculée en prédéfinissant les manoeuvres de conduite et/ou de guidage nécessaires,
- l'interface d'utilisateur (17) ayant une installation d'affichage optique (18) et/ou une installation d'émission vocale (20), acoustique, pour prédéfinir la manoeuvre de conduite et/ou de braquage requise pour l'opération de conduite de stationnement, calculée,
**caractérisé par**
un moyen de sélection (22) pour sélectionner des modes de fonctionnement de l'interface utilisateur/véhicule automobile (17) adaptés de manière personnalisée aux exigences de l'utilisateur du véhicule automobile,
les modes de fonctionnement à sélectionner étant différent du point de vue de leur degré de détail d'information.

2. Système d'assistance de stationnement selon la revendication 1,
**caractérisé par**
au moins une installation d'identification de l'utilisateur (21) qui identifie l'utilisateur du véhicule automobile, automatiquement, par exemple sur le fondement de données biométriques, de clés électroniques, de dimensions corporelles, de réglages de sièges ou de moyens analogues et/ou du fait de l'entrée manuelle par des commutateurs appropriés ou un menu de sélection appropriée.

3. Système d'assistance de stationnement selon la revendication 1 ou la revendication 2,
**caractérisé en ce que**
les modes de fonctionnement à sélectionner se distinguent en outre par leurs types d'informations, leurs images d'apparition optique, leurs images d'apparition acoustique et/ou leurs modes de représentation, ou des moyens analogues.

4. Système d'assistance de stationnement selon au moins l'une des revendications précédentes,
**caractérisé en ce que**
dans un mode de fonctionnement à sélectionner, l'utilisateur du véhicule reçoit séquentiellement des consignes concernant la manoeuvre de roulage et/ou de guidage requise, l'assistance de stationnement donnant des consignes de manoeuvres de guidage seulement dans les états arrêtés du véhicule automobile (1) et des consignes de manoeuvres de déplacement si l'angle de braquage reste constant.

5. Système d'assistance de stationnement selon au moins l'une des revendications précédentes,
**caractérisé en ce que**
dans un mode de fonctionnement à sélectionner, l'utilisateur du véhicule automobile reçoit uniquement des informations concernant l'installation d'une manoeuvre de guidage.

6. Système d'assistance de stationnement selon au moins l'une des revendications précédentes,
**caractérisé en ce que**
l'utilisateur du véhicule automobile reçoit de façon dynamique à la fois des consignes de manoeuvres du véhicule et aussi en même temps des consignes de manoeuvres de direction.

7. Système d'assistance de stationnement selon au moins l'une des revendications précédentes,
**caractérisé en ce que**
l'utilisateur du véhicule automobile reçoit uniquement séquentiellement des consignes de manoeuvres de conduite, le système d'assistance de stationnement effectuant automatiquement les manoeuvres de braquage.

8. Système d'assistance de stationnement selon au moins l'une des revendications précédentes,
**caractérisé en ce qu'**
en cas de reconnaissance d'un nouvel utilisateur du véhicule utilisant pour la première fois le système d'assistance de stationnement, le moyen de sélection (22) sélectionne automatiquement le mode de fonctionnement présentant le degré de détail le plus élevé.

9. Système d'assistance de stationnement selon au moins l'une des revendications précédentes,
**caractérisé en ce que**
les modes personnalisés de l'interface d'utilisateur (17) sont réglables au préalable et sont destinés à être enregistrés dans une installation de mémoire (14).

10. Système d'assistance de stationnement selon la revendication 9,
**caractérisé en ce que**
l'interface d'utilisateur (17) qui identifie un certain utilisateur du véhicule automobile règle automatique au préalable les modes personnalisés enregistrés dans l'installation de mémoire (14).

11. Système d'assistance de stationnement selon au moins l'une des revendications précédentes,
**caractérisé en ce que**
les moyens de sélection (22) sont prévus dans le champ de service d'un instrument combiné du véhicule automobile (1) et/ou font partie d'un programme de commande.

12. Procédé d'assistance de stationnement pour un utilisateur de véhicule automobile, pour effectuer une manoeuvre de stationnement d'un véhicule automobile 1,
selon lequel
on saisit les données concernant l'emplacement de stationnement (6) disponible à l'aide d'une installation de saisie (8),
à l'aide d'une installation d'assistance de manoeuvre de stationnement (15) on calcule une manoeuvre de stationnement de rangement sur le fondement des données représentant l'espace de stationnement (6) disponible, la position instantanée du véhicule et/ou l'angle de braquage instantané à l'aide d'une installation d'assistance (15),
selon lequel, on sélectionne un mode de fonctionnement personnalisé, adapté aux exigences de l'utilisateur du véhicule automobile pour une interface utilisateur/véhicule (17) à l'aide du moyen de sélection (22),
les modes de fonctionnement à sélectionner ayant des degrés de détails d'informations variables,
et par une installation d'affichage optique (18) et/ou une installation d'émission vocale (20), acoustique, on prédéfinit pour l'interfaces utilisateur/véhicule (17), la manoeuvre de direction et/ou de conduite requise pour l'opération de manoeuvre de stationnement calculée selon le mode de fonctionnement sélectionné.

13. Procédé selon la revendication 12,
**caractérisé en ce qu'**
on identifie l'utilisateur du véhicule automobile à l'aide d'une installation d'identification d'utilisateur (21) et on sélectionne automatiquement des modes de fonctionnement de l'interface d'utilisateur du véhicule (17) par des moyens de sélection (22) en fonction des exigences de l'utilisateur du véhicule.

14. Procédé selon la revendication 13,
**caractérisé en ce que**
l'utilisateur du véhicule automobile est identifié automatiquement par exemple à partir de données biométriques, de clés électroniques et de mesures corporelles, de la position du siège et d'éléments analogues et/ou à partir d'une entrée manuelle à l'aide d'un commutateur approprié ou d'un menu de sélection appropriée à l'aide de l'installation d'identification d'utilisateur (21).

15. Procédé selon l'une des revendications 12 à 14,
**caractérisé en ce que**
les modes de fonctionnement sélectionnés ont en outre différents types d'informations, d'images d'apparition optique, d'images d'apparition acoustique et/ ou de types de reproduction sélectionnés.

16. Procédé selon au moins l'une des revendications 12 à 15,
**caractérisé en ce que**
les modes personnalisés prédéfinis de l'interface d'utilisateur (17) sont réglés au préalable par l'utilisateur du véhicule automobile et sont mémorisés dans une installation de mémoire (14).
